# EUROPEAN PATENT SPECIFICATION

(11) **EP 1 780 512 B1**
(45) Date of publication and mention of the grant of the patent: **07.01.2009**
(21) Application number: 05109967.9
(22) Date of filing: 25.10.2005
(51) Int. Cl.: G01C 23/00, G01C 21/00, G08G 5/04

(54) **Altitude monitoring system for aircraft**
Höhenkontrollsystem für ein Flugzeug
Système de surveillance d`altitude pour aéronef

(43) Date of publication of application: 02.05.2007
(73) Proprietor: SAAB AB, 581 88 Linköping (SE)
(72) Inventor: Berglund, Ingmar, 582 72 Linköping (SE); Hedman, Bernt-Ove, 583 33 Linköping (SE); Nordgren, Börje, 589 25 Linköping (SE)
(74) Representative: Lindberg, Olle Nils Olof

(56) References cited:
- EP-A- 1 517 281
- US-A1- 2002 089 433
- US-A1- 2004 111 192

## Description

### Field of invention

The present invention generally relates to a system for monitoring the altitude of an aircraft, and more particularly to such a system that provides an alerting indication when a certain selected altitude value is estimated to be violated by the aircraft.

### Background

During practice flight operations, military aircraft continuously receive instructions from the civil air traffic control. These instructions comprise a cleared flight level or minimum and maximum altitudes available in the current practice area. These instructions are noted by the pilot in his/her knee notepad, and he/she thereafter has to account for following them.

EP-B1- 1 517 281 discloses a system and a method for alerting of potentially hazardous situations in air traffic such that a radar controller is assisted in controlling air traffic, i.e. a large amount of different aircraft sharing the same air space, and uses stochastic models for trajectory prediction of each of the aircrafts.

During missions the perceptive and cognitive load on the pilot may be very high due to the multitude of different systems demanding his/her attention. It is therefore not unusual that obtained altitude limits are violated in the "heat of the battle", constituting an air safety problem.

It is an object of the present invention to provide a device that helps the pilot to keep the aircraft within the altitude limits, and in this, adding to his or hers perceptive and cognitive load as little as possible.

### Brief description of the drawings

The invention is further explained below with the aid of preferred embodiments and the accompanying drawings, of which:
fig. 1 shows an outline of an altitude monitoring system where altitude limits are entered manually by the pilot,
fig. 2 shows an outline of an altitude monitoring system where altitude limits are automatically received and entered via radio communication,
fig. 3 shows a flowchart of a method to alert the pilot to take an evasive manoeuvre to keep an aircraft within altitude limits, and
fig. 4 shows an example of an alerting arrow.

### Summary of the invention

An altitude monitoring system for an aircraft, comprising an input unit that makes it possible to receive or enter cleared flight level and cleared maximum and minimum altitudes into the system, and interfaces or other means to gain access to present altitude and speed, where said system also comprises a calculator unit for calculating a future altitude and a comparator unit that compare said future altitude with said maximum and minimum altitude limits, and/or with a cleared flight level plus/minus a tolerance, and also an alerting unit capable of issuing a warning to an aircraft pilot of said aircraft a certain time before an altitude limit is violated, said certain time being calculated such that an evasive manoeuvre using a specified load factor can be performed within said certain time with no or reasonable margin.

In calculating the future altitude, inter alia current speed vectors and current altitude are used in the calculations.

The system may also comprise means to advise the pilot of the proper direction of evasive manoeuvre.

The certain time may be calculated by continuously calculating an altitude loss/gain for an evasive manoeuvre, using a load factor suitable to the aircraft type in question, and the calculation may also take into consideration the pilot's reaction time, time for load factor build-up and time to roll to 0 or 180 degrees (depending on the evasive manoeuvre in question).

The alert may comprise an audio signal, and the proper direction of evasive manoeuvre may be indicated by an arrow pointing in the desired direction.

The arrow may be space stabilized.

The present invention also concerns a method for altitude monitoring, comprising the following steps:
- receiving altitude limit data,
- presenting altitude limit data,
- calculating regularly if an evasive manoeuvre is necessary to perform to keep the aircraft within altitude limits,
- if an evasive manoeuvre is necessary, alerting the pilot about this at a certain time before the estimated time of violation, such that the evasive manoeuvre can be performed within said certain time, i.e. avoid the imminent violation.

The certain time is calculated by repeated calculation of an altitude loss/gain for an evasive manoeuvre, using a load factor suitable for the aircraft in question. The calculation also takes into consideration the pilot's reaction time, the time for load factor build-up and the time to roll to 0 or 180 degrees.

The load factor in the manoeuvre, that is to be used in the calculations can be set to different values, e.g. in the range 2g to 9g. Preferably, the load factor is selected to match the aircraft type or individual aircraft in question.

The alerting may comprise the steps of issuing an audible signal, and displaying an arrow pointing in the desired direction of the evasive manoeuvre.

The arrow may have a total length of between 2,0 and 3,0 degrees, and may be shown on a head-up display.

The arrow may comprise a vertical line and four angles arranged in two groups, such that the vertical line extends beyond both the first and the fourth angle.

The audible signal may comprise a number of voice frequency impulses.

The audible signal may comprise four voice frequency impulses of approximately900 Hz, with a duration of approximately 1,0 second each, and a very short break between them.

Thus, the present invention refers to a system having means for issuing an evasive command, including a preferred direction, a suitable time before the aircraft reaches current minimum or maximum altitude. Means are also included to adjust this time such that, after a forceful evasive manoeuvre (e.g. with a load factor of 5 g) the aircraft levels out at the current altitude limit. This function is also useable to help the pilot stay at a cleared flight level plus/minus tolerance. Means for feeding the system with minimum and maximum altitude and cleared flight level are provided.

In alternate embodiments, the point in time when a warning is issued is arranged to be identical to exactly the last moment, taking into account a predetermined time representative of the reaction time of the pilot, for beginning an evasive manoeuvre with a predetermined maximum g-load that will keep the aircraft at or slightly within the altitude limit in question. Preferably the predetermined maximum g-load and predetermined time representative of the reaction time of the pilot are set to values that, when repeatedly tested in the air, will lead to an actual levelling out at the altitude limit in question in a majority of cases and an actual levelling out at slightly within the limit in the other cases. This may be due to small variations in the reaction time of the pilot and to small variations in his and the aircraft's momentary ability to perform evasive manoeuvres.

### Detailed description of preferred embodiments

In the following, "unit" refers to an entity being implemented in hardware or software, or a combination thereof, it can be self-contained or integrated in a larger unit or system.

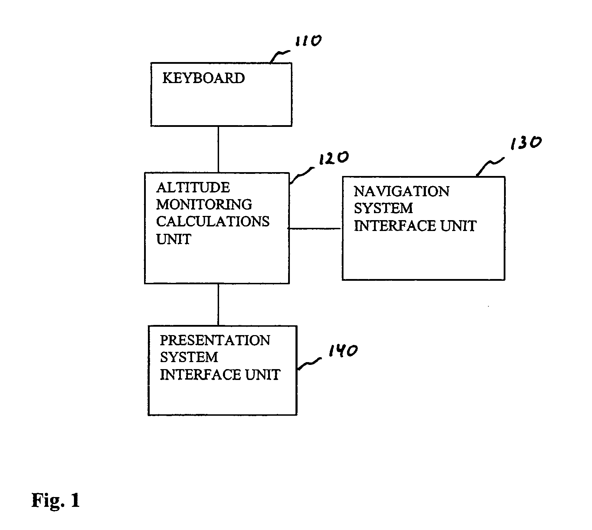

With the term "forceful evasive manoeuvre" is in the following meant an evasive manoeuvre that is equal or close to an optimal evasive manoeuvre balancing on predetermined maximum allowed g-loads for the aircraft during the mission in question. Fig. 1 shows an embodiment of the present invention. A system 100 for monitoring the altitude of an aircraft comprises means to allow the pilot to enter received altitude limits 110. This means may comprise a keyboard 110 with numerical keys and an enter-altitude key. The altitude may in other embodiments be entered by means of software-controlled keys. The system further comprises an altitude monitoring calculations unit 120, connected to said keyboard 110. Said calculations unit 120 performs calculations necessary to be able to issue an alert at a suitable point in time. The calculations unit 120 is further connected to a navigation system interface unit 130, which makes it possible for said calculations unit 120 to get access to navigation data, such as current speed, heading, attitude, angle of attack, load factor and altitude. The altitude monitoring calculations unit 120 is further connected to a presentation system interface, which makes it possible for the calculations unit 120 to get access to speaker(s) and display(s) to issue the alert.

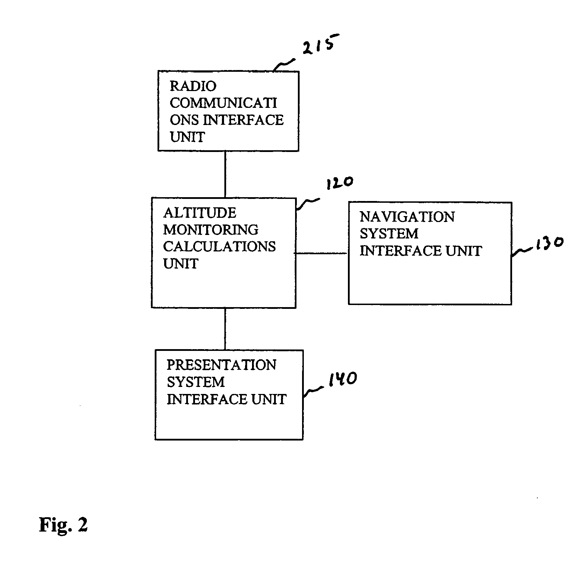

According to a second embodiment, as described in fig. 2, altitude limits are automatically received and entered into the altitude monitoring system. In this case, the altitude monitoring system is interfaced to a radio communications system, or the like, of the aircraft via a radio communications interface unit 215.

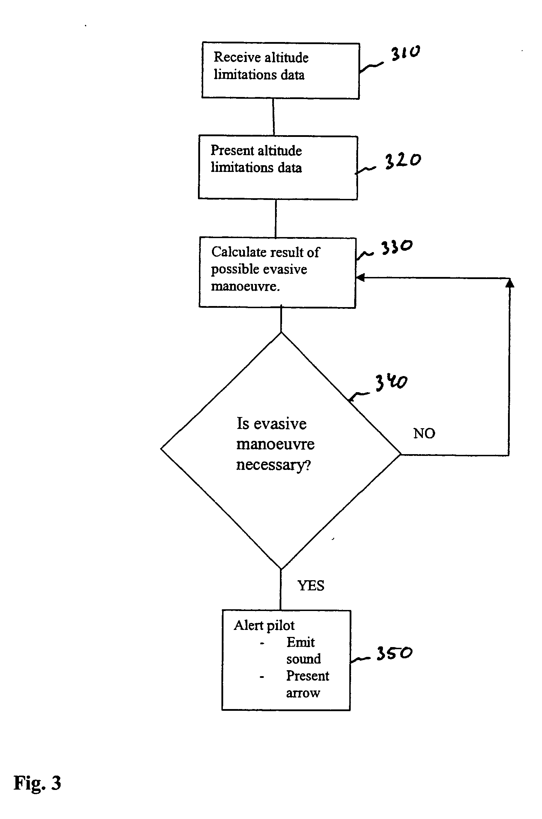

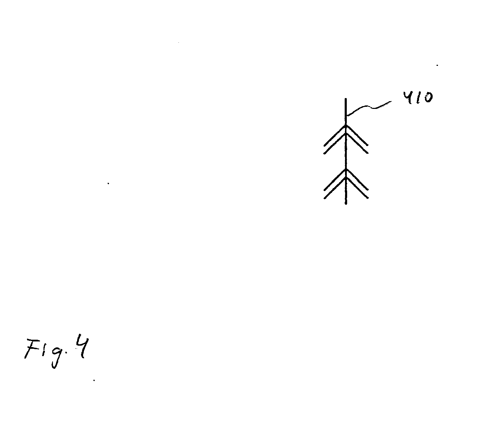

According to a further embodiment of the present invention, a method for monitoring the altitude of an aircraft, and alerting the pilot a certain time before an altitude limit is estimated to be violated, comprises the following steps, see fig. 3.
- receiving altitude limit data, 310
- presenting altitude limit data, 320
- regularly calculating if an evasive manoeuvre is necessary for keeping the aircraft within the altitude limits 330, 340
- if an evasive manoeuvre is necessary, alerting the pilot 350 about this a certain time before the calculated/estimated time of violation, such that the evasive manoeuvre can be performed within said certain time, i.e. so that the aircraft can avoid the imminent violation
- suggesting to the pilot a direction for such an evasive manoeuvre by e.g. presenting an arrow 410, space stabilized in the suggested direction, i.e. up or down, see fig. 4.

The certain time, at which the alert is given, is preferably such that the pilot after an evasive manoeuvre of load factor 5 g (reduced at low speeds) is able to level out at the altitude limit in question. To enable to give the alert/warning at a correct point in time, altitude loss/altitude gain is regularly calculated in advance for an evasive manoeuvre at a certain load factor, e.g. 5 g, taking into consideration the following: the reaction time of the pilot, time for load factor build-up, time to roll to 0 or 180 degrees (depending on current evasive manoeuvre).

In the above description, a load factor of 5 g has been used. The recommended load factor for a certain type of aircraft should of course be selected to fit that type of aircraft.

In another embodiment of the present invention there is provided means to take care of the case when the speed becomes so low that the aircraft no longer is able to perform a manoeuvre at 5g, but only at lower g. In the calculations is in this case used a lower load factor, corresponding to an angle of attack in the range 12-20 degrees. The embodiment is preferably provided with means to allow a higher angle of attack, within said range, at a higher altitude.

The altitude change is geometrically calculated with the aid of a radius of curvature for current load factor and aircraft speed. The altitude change is subsequently adjusted with the aid of a flight condition depending parameter for the change in turning radius, which usually occurs along the path of the aircraft, partly due to speed gain during dive (speed loss when climbing), and partly due to change of the "turning factor" in the path. Here, the "turning factor" is the load factor without the g-component. In a turn with a load factor of 5 g, the "turning factor" is 5 g when diving/climbing strictly vertical, 4 g during a flight path angle of 0 degrees curving upwards, and 6 g during a flight path angle of 0 degrees curving downwards.

Altitude change during time of roll and evasive manoeuvre is calculated both at upper and lower altitude limits for two different cases. On the one hand, calculations are performed for the "normal" case, with an initial curvature of path facing away from the altitude limit. On the second hand, calculations are performed for the case when the aircraft in the evasive manoeuvre "pulls itself through the vertical position", having the "back" towards the vertical line. The results from the two calculations are subsequently compared, and the manoeuvre is selected that gives the smallest change in altitude.

The in the above way calculated total altitude change during an evasive manoeuvre is subsequently compared with the altitude difference between the aircraft and the altitude limit to find out if it is time to issue a warning or an evasive manoeuvre command. The calculations may be performed repeatedly with a frequency of 4,0 Hz. Calculations are preferably performed for both upper and lower altitude limits in each sample.

In the calculation of the upper altitude limit, it is preferably assumed that, during the evasive manoeuvre, the aircraft is piloted to roll to 180 degrees to be able to pull 5 g downwards (except in the case of evasive manoeuvre via vertical position). During moderate climbing (flight path angles less than 10-15 degrees) when the evasive manoeuvre command comes, it is in praxis sufficient just to lower the aircraft nose to level out at the altitude limit (a "gentle bunt manoeuvre"). It is not necessary to arrange a certain calculation for the "bunt manoeuvre". The fact that the turning radius during a bunt becomes much larger is compensated by the fact that also the calculated roll time (to 180 degrees) can be used for "path curving".

In the system and the method a cleared flight level may also be used as input. The same calculations as described above can be made, towards an upper and lower altitude limit. The limits are in that case set to cleared flight level plus and minus a tolerance of preferably 61 m (200 feet). As long as you travel in or about the zone of tolerance, it may sound unnecessary to calculate for evasive manoeuvres with 5 g. As in the case with altitude limits with moderate dive and climb angles, they however provide a warning at an appropriate point in time to make it possible to avoid the altitude limit. Additionally, these calculations are necessary when an aircraft approaches a new cleared flight level at high speed and there is a risk for it to pass right through the new tolerance zone.

## Claims

1. An altitude monitoring system (100) for an aircraft, comprising an input unit (110) that makes it possible to receive or enter cleared flight level and cleared maximum and minimum altitudes into the system, and interfaces (130, 215) or other means to gain access to present altitude and speed, said system (100) also comprising a calculator unit (120) for calculating a future altitude and a comparator unit that compare said future altitude with said maximum and minimum altitude limits, and/or with a cleared flight level plus/minus a tolerance, and also an alerting unit capable of issuing a warning to an aircraft pilot of said aircraft a certain time before an altitude limit is violated, **characterised in that** said certain time being calculated such that an evasive manoeuvre using a specified load factor can be performed within said certain time with no or little margin, and that said system (100) also comprises means (410) to advise the pilot of the proper direction of evasive manoeuvre.

2. The system of claim 1, **characterised in that** said certain time is calculated by continuously calculating an altitude loss/gain for an evasive manoeuvre, using a load factor suitable to the aircraft type in question, and **in that** said calculation also takes into consideration the pilot's reaction time, time for load factor build-up and time to roll to 0 or 180 degrees.

3. The system of claim 1, **characterised in that** said alert comprises an audio signal, and **in that** the proper direction of evasive manoeuvre is indicated by an arrow (410) pointing in the desired direction.

4. The system of claim 3, where said arrow (410) is space stabilized.

5. A method for altitude monitoring, comprising the following steps:
- receiving altitude limit data (310),
- presenting altitude limit data (320),
- calculating regularly if an evasive manoeuvre is necessary to perform to keep the aircraft within altitude limits (330, 340),
- if an evasive manoeuvre is necessary, alerting the pilot (350) about this at a certain time before the estimated time of violation, such that the evasive manoeuvre can be performed within said certain time, i.e. avoid the imminent violation, **characterised in** suggesting to the pilot a direction for such an evasive manoeuvre.

6. The method of claim 5, where said certain time is calculated by repeated calculation of an altitude loss/gain for an evasive manoeuvre, using a load factor suitable for the aircraft in question, and in said calculations also taking into consideration the pilot's reaction time, the time for load factor build-up and time to roll to 0 or 180 degrees.

7. The method of claim 5, where the load factor used is between 2 and 9 g.

8. The method of claim 5, where said alerting (350) comprises the steps of:
- issuing an audible signal, and
- displaying an arrow (410) pointing in the desired direction of the evasive manoeuvre.

9. The method of claim 8, where said arrow (410) has a total length of between 2,0 and 3,0 degrees, and is shown on a head-up display.

10. The method of claim 9, where said arrow (410) comprises a vertical line and four angles arranged in two groups, such that the vertical line extends beyond both the first and the fourth angle.

11. The method of claim 10, where the audible signal comprises a number of voice frequency impulses.

12. The method of claim 11, where the audible signal comprises four voice frequency impulses of approximately 900 Hz, with a duration of approximately 1,0 second each, and a very short break between them.

## Patentansprüche

1. Höhenüberwachungssystem (100) für ein Flugzeug mit einer Eingabeeinheit (110), die es ermöglicht, ein freigegebenes Flugniveau und eine freigegebene maximale und minimale Höhe zu empfangen und in das System einzugeben, und Schnittstellen (130, 215) oder andere Einrichtungen, um einen Zugang auf die gegenwärtige Höhe und Geschwindigkeit zu erhalten, wobei das System (100) auch eine Berechnungseinheit (120) zum Berechnen einer zukünftigen Höhe umfasst und eine Vergleichseinheit, die die zukünftige Höhe mit den maximalen und minimalen Höhenbegrenzungen vergleicht, und/oder mit einem freigegebenen Flugniveau plus/minus einer Toleranz, und auch eine Alarmeinheit, die in der Lage ist, eine Warnung an einen Flugzeugpiloten des Flugzeuges zu einem bestimmten Zeitpunkt auszugeben, bevor eine Höhenbegrenzung verletzt wird, **dadurch gekennzeichnet, dass** die bestimmte Zeit berechnet wird, so dass ein Ausweichmanöver unter Verwendung eines bestimmten Lastfaktors in der bestimmten Zeit mit keiner oder einer geringen Toleranz durchgeführt werden kann, und dass das System (100) auch eine Einrichtung (410) umfasst, um dem Piloten die geeignete Richtung des Ausweichungsmanövers zu empfehlen.

2. System nach Anspruch 1, **dadurch gekennzeichnet, dass** die bestimmte Zeit durch ein kontinuierliches Berechnen eines Höhenverlusts/-Gewinns für ein Ausweichmanöver berechnet wird, unter Verwendung eines für das besagte Flugzeug geeigneten Lastfaktors, und darin, dass die Berechnung auch die Reaktionszeit des Piloten, eine Zeit zur Ausbildung des Lastfaktors und eine Zeit, um auf 0 oder 180 Grad zu drehen, berücksichtigt.

3. System nach Anspruch 1, **dadurch gekennzeichnet, dass** der Alarm ein Audiosignal umfasst, und darin, dass die geeignete Richtung des Ausweichmanövers durch einen Pfeil (410) angezeigt wird, der in die gewünschte Richtung zeigt.

4. System nach Anspruch 3, wobei der Pfeil (410) raumstabilisiert ist.

5. Verfahren zur Höhenüberwachung mit den folgenden Schritten:
- Empfangen von Höhenbegrenzungsdaten (310),
- Präsentieren von Höhenbegrenzungsdaten (320),
- regelmäßiges Berechnen, ob es notwendig ist, ein Ausweichmanöver durchzuführen, um das Flugzeug in den Flughöhengrenzen zu halten (330, 340),
- wenn ein Ausweichmanöver notwendig ist, Alarmieren des Piloten (350) darüber, zu einer bestimmten Zeit vor der geschätzten Zeit der Verletzung, so dass das Ausweichmanöver in der bestimmten Zeit durchgeführt werden kann, d.h. um die unmittelbar bevorstehende Verletzung zu vermeiden, **dadurch gekennzeichnet**, dem Piloten eine Richtung für ein solches Ausweichmanöver vorzuschlagen.

6. Verfahren nach Anspruch 5, wobei die bestimmte Zeit berechnet wird durch eine wiederholte Berechnung eines Höhenverlusts/-Gewinns für ein Ausweichmanöver, unter Verwendung eines für das besagte Flugzeug geeigneten Lastfaktors, und wobei die Berechnungen auch die Reaktionszeit des Piloten, eine Zeit zur Ausbildung des Lastfaktors und eine Zeit, um auf 0 oder 180 Grad zu drehen, berücksichtigt.

7. Verfahren nach Anspruch 5, wobei der verwendete Lastfaktor zwischen 2 und 9 g ist.

8. Verfahren nach Anspruch 5, wobei das Alarmieren (350) die Schritte umfasst:
- Ausgeben eines hörbaren Signals, und
- Anzeigen eines Pfeiles (410), der in die gewünschte Richtung des Ausweichmanövers zeigt.

9. Verfahren nach Anspruch 8, wobei der Pfeil (410) eine totale Länge zwischen 2,0 und 3,0 Grad aufweist, und auf einer Head-Up-Anzeige gezeigt wird.

10. Verfahren nach Anspruch 9, wobei der Pfeil (410) eine vertikale Linie und vier, in zwei Gruppen angeordnete Winkel umfasst, so dass sich die vertikale Linie hinter sowohl dem ersten und vierten Winkel fortsetzt.

11. Verfahren nach Anspruch 10, wobei das hörbare Signal eine Anzahl von Sprachfrequenzimpulsen umfasst.

12. Verfahren nach Anspruch 11, wobei das hörbare Signal vier Sprachfrequenzimpulse von ungefähr 900 Hz umfasst, mit einer Dauer von ungefähr 1,0 Sekunden für jeden, und einer sehr kurzen Unterbrechung dazwischen.

## Revendications

1. Système de surveillance d'altitude (100) pour un aéronef, comprenant une unité d'entrée (110) permettant de recevoir ou d'entrer un niveau de vol autorisé et des altitudes maximale et minimale autorisées dans le système, et des interfaces (130, 215) ou d'autres moyens d'accéder à l'altitude et la vitesse actuelles, ledit système (100) comprenant également une unité calculatrice (120) destinée à calculer une altitude future et une unité de comparaison comparant ladite altitude future avec lesdites limites d'altitude maximale et minimale, et/ou avec un niveau de vol autorisé plus/moins une tolérance, et également une unité d'alarme pouvant émettre un avertissement à un pilote d'aéronef dudit aéronef un certain temps avant qu'une limite d'altitude soit dépassée, **caractérisé en ce que** ledit certain temps est calculé de telle façon qu'une manoeuvre d'évitement utilisant un facteur de charge spécifié peut être réalisée durant ledit certain temps, sans ou avec peu de marge, et **en ce que** ledit système (100) comprend également des moyens (410) pour indiquer au pilote la direction appropriée à ladite manoeuvre d'évitement.

2. Système de la revendication 1, **caractérisé en ce que** ledit certain temps est calculé en calculant de façon continue une perte/un gain d'altitude en vue d'une manoeuvre d'évitement, en utilisant un facteur de charge approprié au type d'aéronef dont il est question, et **en ce que** ledit calcul prend également en considération le temps de réaction du pilote, le temps d'accroissement du facteur de charge et le temps pour pivoter à 0 ou 180 degrés.

3. Système de la revendication 1, **caractérisé en ce que** ladite alarme comprend également un signal audio, et **en ce que** la direction appropriée à ladite manoeuvre d'évitement est indiquée par une flèche (410) dirigée dans la direction souhaitée.

4. Système de la revendication 3, ladite flèche (410) étant stabilisée dans l'espace.

5. Procédé de surveillance d'altitude, comprenant les étapes suivantes :
- réception d'une donnée de limite d'altitude (310),
- présentation d'une donnée de limite d'altitude (320),
- calcul régulier de l'éventualité du besoin de réaliser une manoeuvre d'évitement pour maintenir l'aéronef dans les limites d'altitude (330, 340),
- si une manoeuvre d'évitement est nécessaire, avertissement du pilote (350) à ce sujet un certain temps avant le moment estimé du dépassement, de telle façon qu'une manoeuvre d'évitement puisse être réalisée durant ledit certain temps, c'est-à-dire de façon à éviter le dépassement imminent, **caractérisé par** la suggestion au pilote d'une direction pour une telle manoeuvre d'évitement.

6. Procédé de la revendication 5, ledit certain temps étant calculé par un calcul répété de perte/gain d'altitude pour une manoeuvre d'évitement, en utilisant un facteur de charge approprié au type d'aéronef dont il est question, et lesdits calculs prenant également en considération le temps de réaction du pilote, le temps d'accroissement du facteur de charge et le temps pour pivoter à 0 ou 180 degrés.

7. Procédé de la revendication 5, le facteur de charge utilisé étant compris entre 2 et 9 g.

8. Procédé de la revendication 5, ledit avertissement (350) comprenant les étapes suivantes :
- émission d'un signal audible, et
- affichage d'une flèche (410) dirigée dans la direction souhaitée pour la manoeuvre d'évitement.

9. Procédé de la revendication 8, ladite flèche (410) ayant une longueur totale comprise entre 2,0 et 3,0 degrés, et étant affichée sur un dispositif d'affichage à tête haute.

10. Procédé de la revendication 9, ladite flèche (410) comprenant une ligne verticale et quatre angles répartis en deux groupes, de telle façon que la ligne verticale s'étende au-delà du premier et du quatrième angle.

11. Procédé de la revendication 10, le signal audible comprenant un certain nombre d'impulsions de fréquence vocale.

12. Procédé de la revendication 11, le signal audible comprenant quatre impulsions de fréquence vocale d'approximativement 900 Hz, d'une durée d'environ 1,0 seconde chacune, et une très courte pause entre les impulsions.
